# EUROPEAN PATENT APPLICATION

(11) **EP 4 668 423 A1**
(43) Date of publication of application: **24.12.2025**
(21) Application number: 25181563.5
(22) Date of filing: 09.06.2025
(51) Int. Cl.: H01M 50/107, H01M 50/152, H01M 50/159, H01M 50/167, H01M 50/545, H01M 50/56

(54) **SECONDARY BATTERY**

(30) Priority: 21.06.2024 KR 20240081346
(71) Applicant: SAMSUNG SDI CO., LTD., Yongin-si, Gyeonggi-do 17084 (KR)
(72) Inventor: KIM, Dae Kyu, 17084 Yongin-si (KR); SEO, Kwangsoo, 17084 Yongin-si (KR); PARK, Jongjun, 17084 Yongin-si (KR)
(74) Representative: Marks & Clerk LLP

(57) **Abstract**

A secondary battery includes a cylindrical case, an electrode assembly accommodated in the cylindrical case, and a cap plate electrically connected to the electrode assembly and configured to seal the cylindrical case, wherein the cap plate includes a first flat portion at a center thereof, a second flat portion outside the first flat portion, and a connecting portion between the first flat portion and the second flat portion, and wherein a height of a top surface of the first flat portion is higher than a height of a top surface of the second flat portion.

## Description

### BACKGROUND

### 1. Field

Embodiments relate to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery may be used as a single cell or in a form in which a group of cells are electrically connected, depending on the type of electronic device in which the secondary battery is used. For example, small devices such as cell phones may operate for a predetermined amount of time with the power and capacity of a single secondary cell, while a battery pack in which a plurality of secondary cells are connected in series, parallel, or series-parallel may be used for larger power and capacity requirements, such as in electric vehicles.

The above information disclosed in this Background section is for enhancement of understanding of the background of the present disclosure, and therefore, it may contain information that does not constitute related (or prior) art.

### SUMMARY

The present disclosure relates to a secondary battery including a cylindrical case, an electrode assembly, and a cap plate.

Embodiments include a secondary battery, including a cylindrical case, an electrode assembly accommodated in the cylindrical case, and a cap plate electrically connected to the electrode assembly and configured to seal the cylindrical case, wherein the cap plate includes a first flat portion at a center thereof, a second flat portion outside the first flat portion, and a connecting portion between the first flat portion and the second flat portion, and wherein a height of a top surface of the first flat portion is higher than a height of a top surface of the second flat portion.

The connecting portion may be inclined inward in a radial direction of the cylindrical case.

A first region to which an external tab is welded may be on at least a portion of the first flat portion.

A second region to which an electrode tab of the electrode assembly is welded may be on at least a portion of the second flat portion.

An inner end of the second flat portion may be further inward in a radial direction of the cylindrical case than an outer end of the first flat portion.

The first flat portion may protrude above the cylindrical case to be connected to an external terminal that applies current.

The second flat portion may include a notch on a bottom surface thereof.

On a top surface of the second flat portion, a stepped shape is on a region adjacent to an inner surface of the cylindrical case at a distance from the notch.

The secondary battery may further include a first region on at least a portion of the top surface of the first flat portion, an external tab welded to the first region, a second region on at least a portion of a bottom surface of the first flat portion, and an electrode tab of the electrode assembly welded to the second region.

On the bottom surface of the second flat portion, a stepped shape is on a region adjacent to an inner surface of the cylindrical case at a distance from the notch.

The secondary battery may further include a first region on at least a portion of the top surface of the first flat portion, an external tab welded to the first region, a second region on at least a portion of a bottom surface of the first flat portion, and an electrode tab of the electrode assembly welded to the second region.

The first flat portion may include a notch on a bottom surface thereof.

The secondary battery may further include an insulating gasket between the second flat portion and the cylindrical case.

A height of the cylindrical case may be equal to the height of the first flat portion.

Embodiments include a secondary battery, including an electrode assembly including a first electrode plate, a second electrode plate, and a separator stacked and wound, a cylindrical case configured to accommodate the electrode assembly therein, a cap plate electrically connected to the electrode assembly and configured to seal the cylindrical case, a first electrode tab connected to the first electrode plate and coupled to the cylindrical case, and a second electrode tab connected to the second electrode plate and coupled to the cap plate, wherein the cap plate includes a first flat portion at a center, a second flat portion outside the first flat portion, and a connecting portion between the first flat portion and the second flat portion, and wherein a height of a top surface of the first flat portion is higher than a height of a top surface of the second flat portion.

The connecting portion may be inclined inward in a radial direction of the cylindrical case.

The secondary battery may further include a first region on at least a portion of the first flat portion, an external tab welded to the first region, a second region on at least a portion of the second flat portion, an electrode tab of the electrode assembly welded to the second region, a third region on at least a portion of the cylindrical case, and an external tab welded to the third region, wherein a height of the first region may be equal to a height of the third region.

An inner end of the second flat portion may be further inward in a radial direction of the cylindrical case than an outer end of the first flat portion.

The second flat portion may include a notch on a bottom surface thereof, and a stepped shape on a region adjacent to an inner surface of the cylindrical case at a distance from the notch.

The secondary battery may further include an insulating gasket between the second flat portion and the cylindrical case.

At least some of the above and other features of the invention are set out in the claims.

According to various embodiments of the present disclosure, in a case where a plurality of secondary batteries are welded, the weld heights of adjacent secondary batteries may be the same, thereby facilitating welding.

According to various embodiments of the present disclosure, in a case where the internal pressure of the cylindrical case increases, the deformation of the cap plate having the notch may be prevented and, substantially at the same time, gas may be released from inside the case, thereby achieving stability.

According to various embodiments of the present disclosure, outer tabs connecting a plurality of secondary batteries may have identical weld points to reduce the possibility of poor contact.

However, the technical problem to be solved by the present disclosure is not limited to the above problems, and other problems not mentioned herein, and aspects and features of the present disclosure that would address such problems, will be clearly understood by those skilled in the art from the description of the present disclosure below.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail embodiments with reference to the attached drawings, in which:
FIG. 1 illustrates a perspective view showing a secondary battery according to one or more embodiments of the present disclosure;
FIG. 2 illustrates a cross-sectional view showing a secondary battery according to an embodiment of the present disclosure;
FIG. 3 illustrates a cross-sectional view showing the cap plate of the secondary battery according to an embodiment of the present disclosure;
FIG. 4 illustrates a cross-sectional view showing a state in which the cap plate of the secondary battery shown in FIG. 3 is attached to a cylindrical case;
FIG. 5 illustrates a first region and a third region to which external tabs are welded in the secondary battery according to an embodiment of the present disclosure shown in FIG. 4;
FIG. 6 illustrates a first region and a second region in the cap plate of the secondary battery shown in FIG. 3;
FIG. 7 illustrates a cross-sectional view showing a cap plate of a secondary battery according to another embodiment of the present disclosure;
FIG. 8 illustrates a first region and a second region in the cap plate of the secondary battery shown in FIG. 7;
FIG. 9 illustrates a cross-sectional view showing a cap plate of a secondary battery according to another embodiment of the present disclosure;
FIG. 10 illustrates a first region and a second region in the cap plate of the secondary battery shown in FIG. 9;
FIG. 11 illustrates a cross-sectional view showing a cap plate of a secondary battery according to another embodiment of the present disclosure; and
FIG. 12 illustrates a first region and a second region in the cap plate of the secondary battery shown in FIG. 11.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used herein are intended to describe embodiments of the disclosure and are not intended to limit the disclosure.

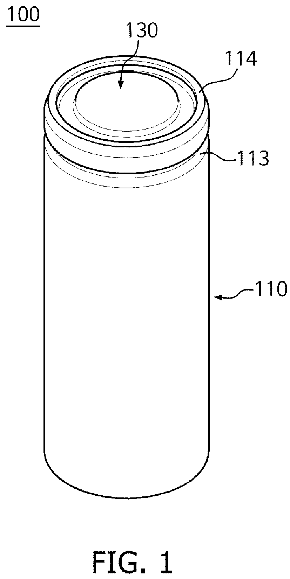

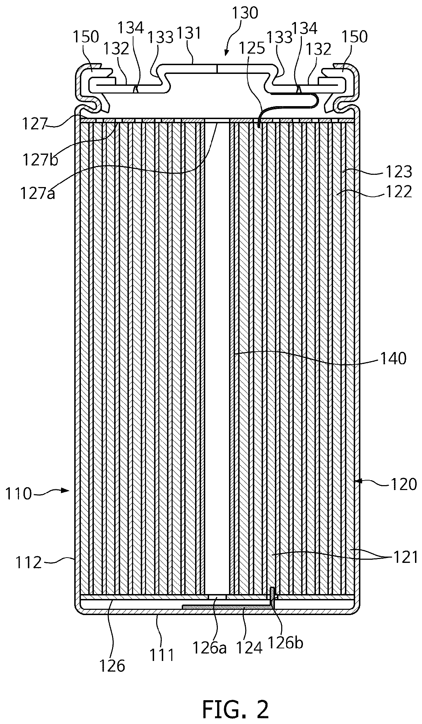

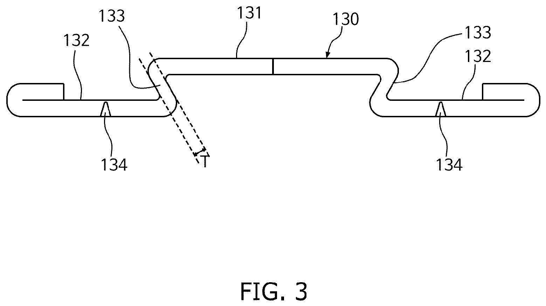

FIG. 1 illustrates a perspective view showing a secondary battery according to embodiments of the present disclosure; FIG. 2 illustrates a cross-sectional view showing a secondary battery according to an embodiment of the present disclosure; and FIG. 3 illustrates a cross-sectional view showing the cap plate of the secondary battery according to an embodiment of the present disclosure.

The secondary battery 100 may include a cylindrical case 110, an electrode assembly 120, and a cap plate 130. The cylindrical case 110 may include a circular bottom portion 111 and a sidewall 112 extending a predetermined length upward from the bottom portion 111. In various embodiments, the cylindrical case 110 may include or be referred to as a can, a shell, or a housing.

During the manufacturing process of the secondary battery, the upper portion of the cylindrical case 110 may be open. Thus, during the assembly process of the secondary battery, the electrode assembly 120 may be integrated into a single structure and inserted into the cylindrical case 110. Thereafter, an electrolyte may be further injected into the cylindrical case 110.

The cylindrical case 110 may be made of steel, a steel alloy, nickel-plated steel, a nickel-plated steel alloy, aluminum, or an aluminum alloy. More specifically, in the cylindrical case 110, a beading portion 113 may be provided on and around the lower portion of the cap plate 130 and depressed inward to prevent the cap plate 130 from being dislodged inward or outward, and a crimping portion 114 may be provided on the upper portion of the beading portion 113 and bent inward.

Herein, the "upper portion" may refer to an end on which the cap plate 130 is disposed in the longitudinal direction of the secondary battery 100. Similarly, the "lower portion" may refer to an end provided opposite the upper portion in the longitudinal direction of the secondary battery.

In an embodiment, the electrode assembly 120 may be accommodated within the cylindrical case 110, and the cap plate 130 may seal the cylindrical case 110. More specifically, the cap plate 130 may be electrically connected to the electrode assembly 120 and may seal the upper portion of the cylindrical case 110. The secondary battery may be a cylindrical secondary battery. In this case, the cap plate 130 may have a disc shape. FIG. 3 illustrates a cross-sectional view based on the diameter of the cap plate 130.

The cap plate 130 may seal an opening of the cylindrical case 110, thereby protecting the electrode assembly 120 from the external environment. The cap plate 130 may fracture if the internal pressure of the cylindrical case 110 is higher than a reference pressure, thereby releasing gas from inside the cylindrical case 110 to the outside. In an embodiment, the cap plate 130 may serve as a positive terminal. The cap plate 130 may be made of aluminum or an aluminum alloy.

The cap plate 130 may include a first flat portion 131, a second flat portion 132, and a connecting portion 133 positioned between the first flat portion 131 and the second flat portion 132. The first flat portion 131 may be positioned approximately at the center of the cap plate 130. The second flat portion 132 may be positioned outside the first flat portion 131. More specifically, the second flat portion 132 may be positioned outside opposite ends of the first flat portion 131. As used herein, the "outside" may refer to a position or region that is progressively more distant from the center of the cylindrical case 110 in the radial direction in a state where the cap plate 130 is attached to the cylindrical case 110.

The connecting portion 133 may be positioned between the first flat portion 131 and the second flat portion 132 to connect the first flat portion 131 and the second flat portion 132. In an embodiment, the height of the top surface of the first flat portion 131 may be formed higher than the height of the top surface of the second flat portion 132.

In an embodiment, the thickness of the first flat portion 131 and the second flat portion 132 may be the same or similar. In an embodiment, the thickness T of the connecting portion 133 may be formed thinner than the thickness of either the first flat portion 131 or the second flat portion 132. The thickness T of the connecting portion 133 may be set differently depending on predetermined breaking pressure. For example, the thickness T of the connecting portion 133 may be set thinner as the predetermined breaking pressure decreases.

In an embodiment, the connecting portion 133 may be inclined inward in the radial direction of the cylindrical case 110. In this case, an inner end of the second flat portion 132 may be positioned farther inward in the radial direction of the cylindrical case than an outer end of the first flat portion 131. In a case where the connecting portion 133 is inclined inward in the radial direction of the cylindrical case 110, the breaking pressure may be higher than in the case where the connecting portion 133 is not inclined, thereby improving the safety of the secondary battery.

In an embodiment, the first flat portion 131 may protrude above the cylindrical case 110 to be connected to an external terminal that applies current. In other words, the first flat portion 131 may be positioned at the top of the cap plate 130 to perform a cap-up function to be connected to the external terminal.

A secondary battery 100 according to another embodiment of the present disclosure may include an electrode assembly 120, a cylindrical case 110, a cap plate 130, a first electrode tab 124, and a second electrode tab 125. Herein, the electrode assembly 120 may have a shape in which a first electrode plate 121, a second electrode plate 122, and a separator 123 are sequentially stacked and wound. The first electrode plate 121, the second electrode plate 122, and the separator 123 may be wound in a cylindrical shape.

The first electrode tab 124 may be connected to the first electrode plate 121 and coupled to the cylindrical case 110. The second electrode tab 125 may be connected to the second electrode plate and coupled to the cap plate 130. The electrode assembly 120 may be accommodated within the cylindrical case 110. The electrode assembly 120 may include or be referred to as an electrode, a group of electrodes, or a jelly roll.

The electrode assembly 120 may include the first electrode plate 121 coated with a negative electrode active material, the second electrode plate 122 coated with a positive electrode active material, and the separator 123. The separator 123 may be positioned between the first electrode plate 121 and the second electrode plate 122 to prevent short-circuiting and allow only migration of lithium ions.

In a case where the first electrode plate 121 is a negative electrode plate, a negative electrode substrate may include, for example, a copper foil or nickel foil, and the negative electrode active material may include, for example, graphite.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material. In a case where the second electrode plate 122 is a positive electrode plate, the positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-8-c}CosX_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); LI(_{3-f})Fe₂(PO₄)₃ (0≤f≤2); or LiₐFePO₄ (0.90≤a≤1.8).

In the above Chemical Formulas, Ais Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

The first electrode tab 124 extending downward a predetermined length may be welded to the first electrode plate 121, and the second electrode tab 125 extending upward a predetermined length may be welded to the second electrode plate 122. In addition, the first electrode tab 124 may be made of copper (Cu) or nickel (Ni), and the second electrode tab 125 may be made of aluminum (Al).

In addition, the first electrode tab 124 of the electrode assembly 120 may be welded to the bottom portion 111 of the cylindrical case 110. Accordingly, the cylindrical case 110 may function as a negative electrode. For example, the first electrode tab 124 may be ultrasonically or laser welded to the bottom portion 111 of the cylindrical case 110.

A first insulating plate 126 coupled to the cylindrical case 110 and having a first hole 126a at the center and a second hole 126b at the periphery may be provided between the electrode assembly 120 and the bottom portion 111. The first insulating plate 126 prevents the electrode assembly 120 from electrically contacting the bottom portion 111 of the cylindrical case 110. The first insulating plate 126 prevents the second electrode plate 122 of the electrode assembly 120 from electrically contacting the bottom portion 111. For example, the first hole 126a allows gas to quickly flow upward through a center pin 140 in a case where a large amount of gas is generated by an abnormality in the secondary battery, and the second hole 126b allows the first electrode tab 124 to extend therethrough to be weld to the bottom portion 111.

In addition, a second insulating plate 127 coupled to the cylindrical case 110 and having a first hole 127a at the center and a plurality of second holes 127b at the periphery may be provided between the electrode assembly 120 and the cap plate 130. The second insulating plate 127 prevents the electrode assembly 120 from electrically contacting the cap plate 130. The second insulating plate 127 prevents the negative electrode plate 121 of the electrode assembly 120 from electrically contacting the cap plate 130.

For example, the first hole 127a allows gas to quickly flow to the cap plate 130 in a case where a large amount of gas is generated by an abnormality in the secondary battery, and the second hole 127b allows the second electrode tab 125 to extend therethrough to be weld to the cap plate 130. In addition, the remaining second hole 127b serves to allow electrolyte to quickly flow into the electrode assembly 120 during the electrolyte injection process.

In addition, the diameters of the first holes 126a and 127a of the first and second insulating plates 126 and 127 are set to be smaller than the diameter of the center pin 140 to prevent the center pin 140 from electrically contacting the bottom portion 111 of the cylindrical case 110 or the cap plate 130 by an external impact. The center pin 140 may be in the shape of a hollow circular pipe, and coupled to the center of the electrode assembly 120. The center pin 140 may be made of, but is not limited to, steel, stainless steel, aluminum, aluminum alloy, or polybutylene terephthalate. The center pin 140 serves to reduce deformation of the electrode assembly 120 during charging and discharging of the secondary battery, and may serve as a conduit for gases generated within the secondary battery.

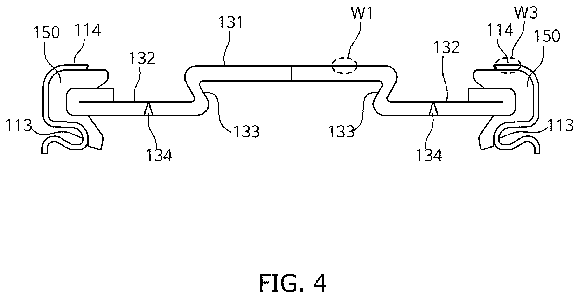

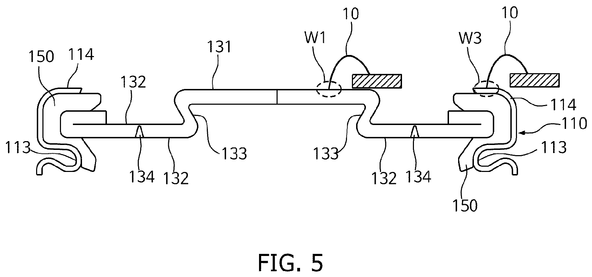

FIG. 4 illustrates a cross-sectional view showing a state in which the cap plate of the secondary battery shown in FIG. 3 is attached to a cylindrical case, and FIG. 5 illustrates a first region and a third region to which external tabs are welded in the secondary battery according to an embodiment of the present disclosure shown in FIG. 4.

In an embodiment, the second flat portion 132 may be positioned outside the first flat portion 131 and fixed to the cylindrical case 110 by an insulating gasket 150. The insulating gasket 150 may be provided between the cap plate 130 and the cylindrical case 110. More specifically, the insulating gasket 150 may be provided between the second flat portion 132 and the cylindrical case 110.

The insulating gasket 150 may insulate between the cap plate 130 and the cylindrical case 110. In an embodiment, the insulating gasket 150 may wrap around the outer periphery of the second flat portion 132 of the cap plate 130. The outer surface of the insulating gasket 150 may be brought into close contact with the beading portion 113 and the crimping portion 114, and the inner surface of the insulating gasket 150 may be brought into close contact with the second flat portion 132. In an embodiment, the insulating gasket 150 may include or be referred to as a sealing gasket, insulator, or resin. The insulating gasket 150 may be formed of, but not limited to, a resin material such as polyethylene (PE), polypropylene (PP), or polyethylene terephthalate (PET).

In a state where the cap plate 130 is fixed to the cylindrical case 110 by the insulating gasket 150, the height of the cylindrical case 110 and the height of the first flat portion 131 may be approximately the same (e.g., the top surfaces of the cylindrical case 110 and the first flat portion 131 may be coplanar). More specifically, the height of the crimping portion 114 at the upper end of the cylindrical case 110 and the height of the first flat portion 131 may be approximately the same.

The secondary battery 100 according to an embodiment of the present disclosure has a first region W1 to which an outer tab is welded on at least a portion of the first flat portion 131 and a third region W3 to which an outer tab is welded on at least a portion of the cylindrical case 110, wherein the height of the first region W1 and the height of the third region W3 may be the same. Accordingly, as shown in FIG. 5, the outer tab 10 welded to the first region W1 and the outer tab 10 welded to the third region W3 may have the same welding point, which may facilitate welding and may also reduce the possibility of poor contact.

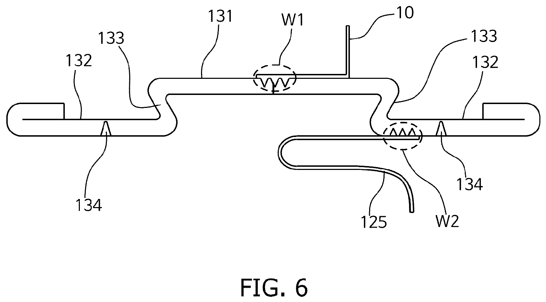

FIG. 6 illustrates a first region and a second region in the cap plate of the secondary battery shown in FIG. 3.

In an embodiment, the first flat portion 131 may have, on at least a portion thereof, a first region W1 to which the outer tab 10 is welded. The second flat portion 132 may also have, on at least a portion thereof, a second region W2 to which an electrode tab of the electrode assembly 120 is welded. For example, a second electrode tab 125 may be welded to the second region W2.

The height of the first flat portion 131 may be set higher than the height of the second flat portion 132. The top surface of the first flat portion 131 may be higher than the top surface of the second flat portion 132. In other words, the top surface of the first flat portion 131 and the top surface of the second flat portion 132 may not be positioned in the same plane. Therefore, there may be a height difference between the top surface of the first flat portion 131 and the top surface of the second flat portion 132 (e.g., the top surfaces of the first and second flat portions 131 and 132 facing away from the electrode assembly 120), relative to the top of the electrode assembly 120. As shown in FIG. 6, if the inner end of the second flat portion 132 is positioned radially farther inward in the radial direction of the cylindrical case 110 than the outer end of the first flat portion 131 (e.g., so the outer end of the first flat portion 131 overhangs the inner end of the second flat portion 132), a sufficient area for the second region W2 may be obtained.

The first flat portion 131 may be positioned approximately at the center of the cap plate 130, and may have, on the upper portion thereof, the first region W1 to which the outer tab 10 may be welded. In an embodiment, the outer tab 10 may be ultrasonically or laser welded to the top surface of the first flat portion 131. That is, the top surface of the first flat portion 131 may be exposed to the outside and may be electrically connected to an external device to serve as a terminal.

The second flat portion 132 may have, on the lower portion thereof, the second region W2 to which the second electrode tab 125 may be welded. In an embodiment, the second electrode tab 125 may be ultrasonically or laser welded to the bottom surface of the second flat portion 132.

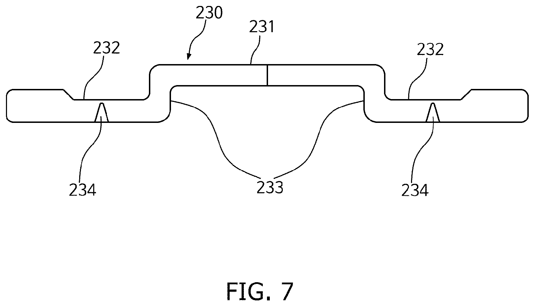

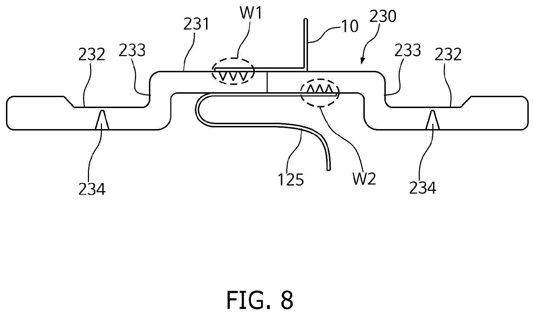

FIG. 7 illustrates a cross-sectional view showing a cap plate of a secondary battery according to another embodiment of the present disclosure, and FIG. 8 illustrates a first region and a second region in the cap plate of the secondary battery shown in FIG. 7.

In an embodiment, the cap plate 230 may include a first flat portion 231, a second flat portion 232, and a connecting portion 233 positioned between the first flat portion 231 and the second flat portion 232. The first flat portion 231 may be positioned approximately at the center of the cap plate 230. The connecting portion 233 may be shaped to extend approximately perpendicularly from opposite ends of the first flat portion 231 to the second flat portion 232.

In an embodiment, the second flat portion 232 may include a notch 234 provided on the bottom surface. The notch 234 may be formed at a predetermined depth on the bottom surface of the second flat portion 232. For example, the notch 234 may be shaped to extend continuously in the circumferential direction on the bottom surface of the second flat portion 232.

If the internal pressure of the secondary battery 100 is greater than the working pressure of the cap plate 230, the notch 234 may break, thereby releasing gas from inside the cylindrical case 110 to the outside, thereby improving the safety of the secondary battery 100. In addition, the secondary battery 100 may have a lower internal resistance and a lighter weight by having only the cap plate 230 as a component for sealing the upper portion of the cylindrical case 110 and by eliminating a conventional component having a current blocking function.

On the top surface of the second flat portion 232, a stepped shape may be provided on a region adjacent to the inner surface of the cylindrical case 110 (i.e., the outer region of the second flat portion 232) at a distance from the notch 234 to protrude upward. Accordingly, the thickness of the region of the second flat portion 232 where the notch 234 is formed may be thinner than the outer region having the stepped shape, thereby facilitating the breaking of the notch 234.

As shown in FIG. 8, the first flat portion 231 may have, on at least a portion of the top surface thereof, a first region W1 to which the outer tab 10 is welded and, on at least a portion of the bottom surface thereof, a second region W2 to which the electrode tab of the electrode assembly 120 is welded.

The first region W1 may be provided on the upper portion of the first flat portion 231, such that the outer tab 10 may be welded thereto. In an embodiment, the outer tab 10 may be ultrasonically or laser welded to the top surface of the first flat portion 231. That is, the top surface of the first flat portion 231 may be exposed to the outside and may be electrically connected to an external device to serve as a terminal.

The second region W2 may be provided on the lower portion of the first flat portion 231, such that the second electrode tab 125 may be welded thereto. In an embodiment, the second electrode tab 125 may be ultrasonically or laser welded to the bottom surface of the second flat portion 232.

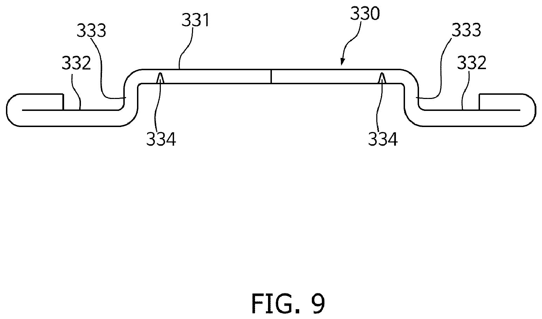

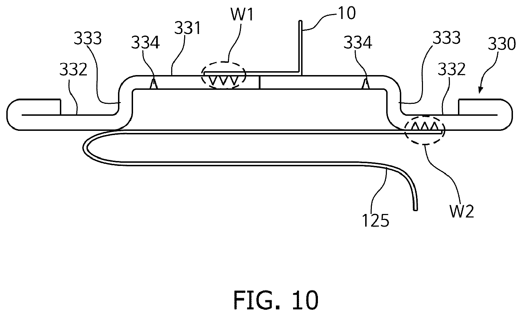

FIG. 9 illustrates a cross-sectional view showing a cap plate of a secondary battery according to another embodiment of the present disclosure, and FIG. 10 illustrates a first region and a second region in the cap plate of the secondary battery shown in FIG. 9.

In an embodiment, the cap plate 330 may include a first flat portion 331, a second flat portion 332, and a connecting portion 333 positioned between the first flat portion 331 and the second flat portion 332. The first flat portion 331 may be positioned approximately at the center of the cap plate 330. The connecting portion 333 may be shaped to be connected to the second flat portion 332 in a vertical direction from opposite ends of the first flat portion 331. The connecting portion 333 may extend to be gradually bent in a perpendicular direction from opposite ends of the first flat portion 331 and may be connected in a gently bent manner to a first end of the second flat portion 332.

In an embodiment, the first flat portion 331 may have a notch 334 formed on the bottom surface. On the other hand, because a separate notch is not formed on the second flat portion 332, a sufficient area for forming a second region W2 may be obtained on the bottom surface of the second flat portion 332. The second flat portion 332 may be folded as the opposite ends are attached to the cylindrical case 110.

The first flat portion 331 may have, on the upper portion thereof, a first region W1 to which the outer tab 10 may be welded. In an embodiment, the outer tab 10 may be ultrasonically or laser welded to the top surface of the first flat portion 331.

The second flat portion 332 may have, on the lower portion thereof, the second region W2 to which the second electrode tab 125 may be welded. In an embodiment, the second electrode tab 125 may be ultrasonically or laser welded to the bottom surface of the second flat portion 332.

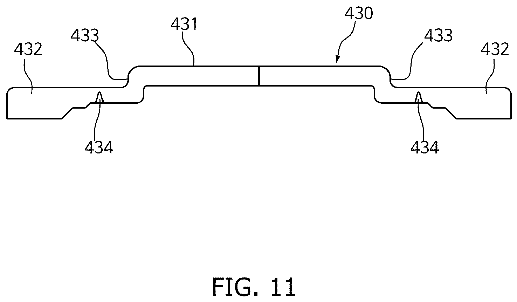

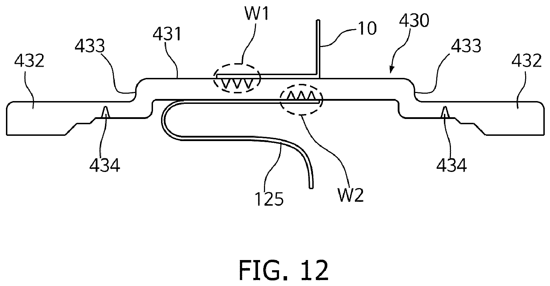

FIG. 11 illustrates a cross-sectional view showing a cap plate of a secondary battery according to another embodiment of the present disclosure, and FIG. 12 illustrates a first region and a second region in the cap plate of the secondary battery shown in FIG. 11.

In an embodiment, the cap plate 430 may include a first flat portion 431, a second flat portion 432, and a connecting portion 433 positioned between the first flat portion 431 and the second flat portion 432. The first flat portion 431 may be positioned approximately at the center of the cap plate 430. The connecting portion 433 may extend vertically from opposite ends of the first flat portion 431 and be connected to the second flat portion 432.

In an embodiment, on the bottom surface of the second flat portion 432, a stepped shape may be provided on a region adjacent to the inner surface of the cylindrical case 110 (i.e., an outer region of the second flat portion 432) at a distance from the notch 434 to extend downward. Accordingly, the region of the second flat portion 432 where the notch 434 is provided may be formed to be thinner than the outer region of the second flat portion 432, thereby facilitating the breaking of the notch 434.

In an embodiment, the first flat portion 431 may have, on at least a portion of the top surface thereof, a first region W1 to which the outer tab 10 is welded. In addition, the first flat portion 431 may also have, on at least a portion of the bottom surface thereof, a second region W2 to which the electrode tab 125 of the electrode assembly 120 is welded.

The first region W1 may be provided on the upper portion of the first flat portion 431, such that the outer tab 10 may be welded thereto. In an embodiment, the outer tab 10 may be ultrasonically or laser welded to the top surface of the first flat portion 431.

The second region W2 may be provided on the lower portion of the first flat portion 431, such that the second electrode tab 125 may be welded thereto. In an embodiment, the second electrode tab 125 may be ultrasonically or laser welded to the bottom surface of the second flat portion 432.

An outer tab connected to an external secondary battery is welded to the top surface of the central portion of a cap plate of a secondary battery and the top surface of a crimping portion of a cylindrical case, but in a case where the height of the central portion of the cap plate is lower than the height of the crimping portion, the difference in the height of weld points causes difficulty in connecting the secondary batteries.

According to the configuration described above, in the secondary battery, the height of the first flat portion to which the outer tab is welded is set higher than the height of the second flat portion, so that when a plurality of secondary batteries are welded through an outer tab for electrical connection, the ease of welding between the adjacent secondary batteries may be obtained and the effect of reducing the possibility of poor contact may be obtained.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### <Description of Reference Symbols>

10: outer tab
100: secondary battery
110: cylindrical case
111: bottom portion
112: sidewall
113: beading portion
114: crimping portion
120: electrode assembly
121: first electrode plate
122: second electrode plate
123: separator
124: first electrode tab
125: second electrode tab
130, 230, 330, 430: cap plate
131, 231, 331, 431: first flat portion
132, 232, 332, 432: second flat portion
133, 233, 333, 433: connecting portion
134, 234, 334, 434: notch
140: center pin
150: insulating gasket

## Claims

1. A secondary battery (100), comprising:
a cylindrical case (110);
an electrode assembly (120) accommodated in the cylindrical case (110); and
a cap plate (130, 230, 330, 430) electrically connected to the electrode assembly (120) and configured to seal the cylindrical case (110),
wherein the cap plate (130, 230, 330, 430) comprises a first flat portion (131, 231, 331, 431) at a center thereof, a second flat portion (132, 232, 332, 432) outside the first flat portion (131, 231, 331, 431), and a connecting portion (133, 233, 333, 433) between the first flat portion (131, 231, 331, 431) and the second flat portion (132, 232, 332, 432), and
wherein a height of a top surface of the first flat portion (131, 231, 331, 431) is higher than a height of a top surface of the second flat portion (132, 232, 332, 432).

2. The secondary battery (100) as claimed in claim 1, wherein the connecting portion (133) is inclined inward in a radial direction of the cylindrical case (110).

3. The secondary battery (100) as claimed in claim 1 or claim 2, wherein a first region (W1) to which an external tab (10) is welded is on at least a portion of the first flat portion (131, 231, 331, 431).

4. The secondary battery (100) as claimed in claim 3, wherein a second region (W2) to which an electrode tab of the electrode assembly (120) is welded is provided on at least a portion of the second flat portion (132, 232, 332, 432).

5. The secondary battery (100) as claimed in any one of the preceding claims, wherein an inner end of the second flat portion (132) is positioned farther inward in a radial direction of the cylindrical case (110) than an outer end of the first flat portion (131).

6. The secondary battery (100) as claimed in any one of the preceding claims, wherein the first flat portion (131, 231, 331, 431) protrudes above the cylindrical case (110) to be connected to an external terminal that applies current.

7. The secondary battery (100) as claimed in any one of the preceding claims, wherein the second flat portion (132, 232, 432) comprises a notch (134, 234, 434) provided on a bottom surface thereof.

8. The secondary battery (100) as claimed in claim 7, wherein on a top surface of the second flat portion (232), a stepped shape is on a region adjacent to an inner surface of the cylindrical case (110) at a distance from the notch (234).

9. The secondary battery (100) as claimed in claim 8, further comprising:
a first region (W1) on at least a portion of the top surface of the first flat portion (231);
an external tab (10) welded to the first region (W1);
a second region (W2) on at least a portion of a bottom surface of the first flat portion (231); and
an electrode tab of the electrode assembly (120) welded to the second region (W2).

10. The secondary battery (100) as claimed in claim 7 or claim 8, wherein on the bottom surface of the second flat portion (432), a stepped shape is on a region adjacent to an inner surface of the cylindrical case (110) at a distance from the notch (434).

11. The secondary battery (100) as claimed in claim 10, further comprising:
a first region (W1) on at least a portion of the top surface of the first flat portion (431);
an external tab (10) welded to the first region (W1);
a second region (W2) on at least a portion of a bottom surface of the first flat portion (431); and
an electrode tab of the electrode assembly (120) welded to the second region (W2).

12. The secondary battery (100) as claimed in any one of the preceding claims, wherein the first flat portion (331) comprises a notch (334) on a bottom surface thereof.

13. The secondary battery (100) as claimed in any one of the preceding claims, further comprising an insulating gasket (150) between the second flat portion (132, 232, 332, 432) and the cylindrical case (110).

14. The secondary battery (100) as claimed in any one of the preceding claims, wherein a height of the cylindrical case (110) is equal to the height of the first flat portion (131, 231, 331, 431).

15. The secondary battery (100) as claimed in any one of the preceding claims, further comprising:
a third region (W3) on at least a portion of the cylindrical case (110); and
an external tab (10) welded to the third region (W3),
wherein a height of the first region (W1) is equal to a height of the third region (W3).
